# EUROPÄISCHE PATENTSCHRIFT

(11) **EP 1 865 032 B1**
(45) Veröffentlichungstag und Bekanntmachung des Hinweises auf die Patenterteilung: **11.12.2019**
(21) Anmeldenummer: 07010052.4
(22) Anmeldetag: 21.05.2007
(51) Int. Cl.: C09C 1/00, C09D 5/36, C03C 1/04, C04B 35/628

(54) **Effektpigmente auf der Basis von Glimmerplättchen**
Effect pigments on the basis of mica flakes
Pigments à effet à base de paillettes de mica

(30) Priorität: 08.06.2006 DE 102006027025
(43) Veröffentlichungstag der Anmeldung: 12.12.2007
(73) Patentinhaber: Merck Patent GmbH, 64293 Darmstadt (DE)
(72) Erfinder: Pfaff, Gerhard, Dr., 64839 Münster (DE); Dietz, Johann, Dr., 63218 Dietzenbach (DE); Schoen, Sabine, Dr., 45701 Herten (DE); Warthe, Doreen, 64347 Griesheim (DE)

(56) Entgegenhaltungen:
- EP-A1- 0 723 997
- EP-A2- 0 657 510
- EP-A2- 1 422 268
- JP-A- 10 279 828

## Beschreibung

Die vorliegende Erfindung betrifft vergilbungsstabile silberweiße Effektpigmente mit hohem Weißgrad auf der Basis von synthetischen Glimmerplättchen sowie deren Verwendung, insbesondere in Farben, Lacken, Druckfarben, Kunststoffen, als Dotiermittel für die Lasermarkierung von Kunststoffen und Papieren, als Additiv im Lebensmittel- und Pharmabereich und in kosmetischen Formulierungen.

Silberweiße Glanz- oder Effektpigmente werden in vielen Bereichen der Technik eingesetzt, insbesondere im Bereich der Autolacke, der dekorativen Beschichtung, im Kunststoff, in Farben, Druckfarben sowie in kosmetischen Formulierungen. Bekannt sind silberweiße Effektpigmente (Perlglanzpigmente) auf Basis von natürlichem Glimmer (Muskovit) sowie von synthetischem Glimmer.

Die im Markt erhältlichen silberweißen Effektpigmente bestehen in der Regel aus natürlichen Glimmerplättchen, die mit einer dünnen Titandioxid-Schicht umhüllt sind. Auf Grund der natürlichen Entstehung enthalten Muskovit-Glimmer immer Fremdbestandteile, wie z.B. Eisenverbindungen, die in der Regel zu einer leichten Färbung führen. Synthetischer Phlogopit-Glimmer kann hingegen so hergestellt werden, dass er nahezu frei von Fremdbestandteilen ist. Daher weist er üblicherweise keine Färbung auf. Besonders für die Entwicklung von silberweißen Effektpigmenten bietet der synthetische Glimmer daher eine gute Alternative zum natürlichen Glimmer.

Der im Handel erhältliche synthetische Glimmer wird in der Regel über ein Schmelzverfahren ausgehend von Oxiden, Carbonaten und Fluoriden hergestellt. Nach Abkühlen der Schmelze können Glimmerplättchen in günstiger Weise unter Verwendung von speziellen mechanischen Zerkleinerungsverfahren ausgehend von den nach der Schmelze anfallenden groben Glimmerbrocken hergestellt werden. Die Plättchen werden fraktioniert, wobei bestimmte Kornfraktionen und Dicken entstehen. Sie können in der Folge als Substratmaterial zur Erzeugung von Effektpigmenten dienen. In diesem Fall werden die Glimmerplättchen nachfolgend mit einem Metalloxid belegt. Derartige Pigmente werden am Markt angeboten. Diese Pigmente zeichnen sich durch eine breite Teilchengrößen- und Dickenverteilung aus.

Mit Titandioxid beschichtete synthetische Glimmerplättchen werden auch in der Patentliteratur beschrieben, beispielsweise in der U.S. 3,087,828, EP 0 723 997 B1, EP 1 422 268 A2, JP H10-279828 A, EP 0 657 510 A2, WO 2002/033007 und CN 1664021 A.

Nachteile der aus dem Stand der Technik bekannten Effektpigmente, basierend auf synthetischen Glimmerplättchen beschichtet mit TiO₂, sind jedoch die geringe Vergilbungsstabilität dieser Pigmente in Polymersystemen sowie das Auftreten starker Streueffekte.

Aufgabe der vorliegenden Erfindung ist es daher silberweiße Effektpigmente mit hohem Weißgrad und Glanz zur Verfügung zu stellen, die gleichzeitig eine hohe Vergilbungsstabilität besitzen und die oben angegebenen Nachteile nicht aufweisen.

Überraschenderweise wurde nun gefunden, dass die Belegung von synthetischen Glimmerplättchen mit einer genau definierten Partikelgröße mit einer hochbrechenden Beschichtung aus Titandioxid und einer schwerlöslichen Erdalkaliverbindung zu silberweißen Effektpigmenten führt, die sich nicht nur durch ihren Weißgrad auszeichnen, sondern auch durch ihre hohe Vergilbungsstabilität. Weiterhin zeigen die so hergestellten Effektpigmente im Vergleich zu den aus dem Stand der Technik bekannten mit TiO₂ beschichteten synthetischen Glimmerplättchen
- eine rein weiße Körperfarbe
- einen sehr hellen und starken Glanz und
- ein hohes Deckvermögen.

Gegenstand der vorliegenden Erfindung sind daher gemäß Anspruch 1 vergilbungsstabile silberweiße Effektpigmente mit einem hohen Weißgrad, die sich dadurch auszeichnen, dass sie auf synthetischen Glimmerplättchen basieren, die eine Äquivalenz-Durchmesserverteilung aufweisen, nach der 90 % der Teilchen im Bereich von 2 bis 40 µm liegen, und eine Dickenverteilung aufweisen, nach der 90 % der Teilchen im Bereich von 100 bis 3500 nm liegen, und die eine Beschichtung mit einer Brechzahl ≥ 1,9 enthaltend Titandioxid und eine oder mehrere schwerlösliche Erdalkaliverbindungen und/oder Zinkoxid aufweisen.

Gegenstand der vorliegenden Erfindung ist weiterhin die Verwendung der erfindungsgemäßen silberweißen Effektpigmente in Farben, Lacken, Druckfarben, Kunststoffen, Knopfpasten, keramischen Materialien, Gläsern, zur Saatgutbeschichtung, als Additiv zum Laserschweißen von Kunststoffen, als Dotiermittel bei der Lasermarkierung oder beim Laserschweißen von Kunststoffen und Papieren, als Additiv zur Einfärbung im Lebensmittel- und Pharmabereich und in kosmetischen Formulierungen. Weiterhin sind die erfindungsgemäßen Pigmente auch zur Herstellung von Pigmentpräparationen sowie zur Herstellung von Trockenpräparaten, wie z. B. Granulaten, Chips, Pellets, Briketts, etc., geeignet. Die Trockenpräparate sind insbesondere für Druckfarben und für kosmetische Formulierungen geeignet.

Wesentlich für die erfindungsgemäßen silberweißen Effektpigmente ist das Basissubstrat und dessen Partikelgröße. Die im Markt angebotenen Effektpigmente auf Basis von synthetischem Glimmer, z.B. von den Firmen Sky Chemical und Topy Kogyo, zeichnen sich durch eine sehr breite Teilchengrößen- und Dickenverteilung aus.

Zur Erzielung eines hohen Weißgrades der erfindungsgemäßen silberweißen Effektpigmente ist aber die genaue Einstellung der Partikelgröße des Ausgangssubstrats von Bedeutung. Für die Definition des Weißgrades existieren etwa 25 Weißgradformeln, die sich auf Messungen an reinen pulverförmigen Materialien wie Pigmenten oder Füllstoffen, aber auf Messungen an Anwendungsmedien, in denen die Pigmente oder Füllstoffe enthalten sind, beziehen. In aller Regel spielt der Weißgrad bei Weißpigmenten und Füllstoffen eine wichtige Rolle. Eine Bestimmungsmethode für Weißgrade findet sich im ASTM E 313-73. Die verschiedenen Weißgrade dienen dazu, das physiologische und psychische Empfinden des Auges mit der physikalisch ermittelten Helligkeit zu verknüpfen. Zudem berücksichtigen die Weißgradformeln mehr oder weniger stark auch Farbanteile. Der Ausdruck "Weißgrad" selbst stellt keine direkt zugängliche Messgröße dar. Es handelt sich dabei um einen Wert, der je nach Einsatzbereich mit Hilfe von Farbmesswerten aus Formeln berechnet werden kann. Diese Formeln unterscheiden sich darin, dass sie bestimmte Buntanteile mehr oder weniger bevorzugen.

Geeignete Glimmerplättchen für die erfindungsgemäßen silberweißen Effektpigmente besitzen eine Äquivalenzdurchmesser-Verteilung, nach der 90 % der Teilchen im Bereich von 2 bis 40 µm, vorzugsweise von 5 bis 40 µm, insbesondere von 3 bis 35 µm, ganz besonders bevorzugt von 5 bis 30 µm, liegen. Neben der Äquivalenzdurchmesser-Verteilung spielt ebenfalls die Dickenverteilung der Glimmerplättchen eine Rolle. So weisen geeignete Basissubstrate vorzugsweise eine Dickenverteilung auf, nach der 90 % der Teilchen im Bereich von 100 bis 3500 nm, vorzugsweise 200 bis 2600 nm, insbesondere 250 bis 2200 nm, liegen.

Vorzugsweise beträgt der Formfaktor (aspect ratio: Durchmesser/Dicke-Verhältnis) der synthetischen Glimmerplättchen 5 - 200, insbesondere 7 - 150 und ganz besonders bevorzugt 10 - 100.

Synthetische Glimmerplättchen mit diesen Dimensionen können mit den dem Fachmann bekannten Mahlverfahren und Klassierungsmethoden hergestellt werden.

Es handelt sich bei dem synthetischem Glimmer vorzugsweise um Fluorophlogopit in den üblichen chemischen Toleranzen der Zusammensetzung.

Die synthetischen Glimmerplättchen mit den genau eingestellten Partikelgrößen werden nachfolgend mit einer hochbrechenden Schicht belegt, die neben Titandioxid mindestens eine schwerlösliche Erdalkalimetallverbindung enthält. Die Brechzahl dieser Schicht ist ≥ 1,9, vorzugsweise ≥ 2,0 und insbesondere ≥ 2,1. Diese hochbrechende Beschichtung kann aus einem Gemisch aus TiO₂ und einer schwerlöslichen Erdalkalimetallverbindung und/oder Zinkoxid bestehen oder aus zwei separaten Schichten. In diesem Fall wird auf die TiO₂-Schicht eine dünne Schicht aus einer schwerlöslichen Erdalkalimetallverbindung bzw. Zinkoxid aufgebracht.

Die hochbrechende Beschichtung weist in der Regel Schichtdicken auf von 20 - 130 nm, vorzugsweise von 30 - 100 nm und insbesondere von 40 - 70 nm.

Das Titandioxid kann in der hochbrechenden Beschichtung in der Rutil- oder in der Anatasmodifikation vorliegen, vorzugsweise liegt es als Rutil vor. Die Verfahren zur Herstellung von Rutil sind im Stand der Technik beispielsweise beschrieben in der U.S. 5,433,779, U.S. 4,038,099, U.S. 6,626,989, DE 25 22 572 C2, EP 0 271 767 B1. Vorzugsweise wird vor der TiO₂-Auffällung auf das Glimmerplättchen eine dünne Zinndioxidschicht (< 10 nm) aufgebracht, die als Additiv dient um das TiO₂ als Rutilphase zu erhalten.

Neben dem Titandioxid enthält die hochbrechende Beschichtung als weiteren wichtigen Bestandteil eine oder mehrere schwerlösliche Erdalkalimetallverbindungen. Vorzugsweise besteht die hochbrechende Beschichtung aus TiO₂ und einem schwerlöslichem Erdalkalititanat, Erdalkalistannat und/oder Erdalkalizirkonat. Alternativ kann auch Zinkoxid in Kombination mit oder anstelle der genannten Erdalkaliverbindungen eingesetzt werden. Sofern es sich um separate Schichten handelt wird auf die TiO₂-Schicht, die vorzugsweise als Rutil vorliegt, ein schwerlösliches Erdalkalititanat, Erdalkalistannat und/oder Erdalkalizirkonat und/oder Zinkoxid aufgebracht.

In einer besonders bevorzugten Ausführungsform besteht das Erdalkalititanat in der hochbrechenden Beschichtung aus Magnesium-, Calcium-, Strontium- oder Bariumtitanat, das Erdalkalistannat aus Magnesium-, Calcium-, Strontium- oder Bariumstannat und das Erdalkalizirkonat aus Magnesium-, Calcium-, Strontium- oder Bariumzirkonat. Weiterhin ist auch ein Gemisch der genannten Erdalkaliverbindungen möglich.

Besonders bevorzugte Effektpigmente weisen eine hochbrechende Beschichtung aus enthaltend Titandioxid und mindestens eine schwerlösliche Erdalkaliverbindung ausgewählt aus der Gruppe MgTiO₃, CaTiO₃, SrTiO₃, BaTiO₃, MgSnO₃, CaSnO₃, SrSnO₃, BaSnO₃, MgZrO₃, CaZrO₃, SrZrO₃ oder BaZrO₃.

Bevorzugte Effektpigmente besitzen eine hochbrechende Beschichtung bestehend aus
- TiO₂ (Anatas) + Calciumtitanat
- TiO₂ (Rutil) + Calciumtitanat
- TiO₂ (Anatas) + Calciumzirkonat
- TiO₂ (Rutil) + Calciumzirkonat
- TiO₂ (Anatas) + Calciumstannat
- TiO₂ (Rutil) + Calciumstannat
- TiO₂ (Anatas) + Zinkoxid
- TiO₂ (Rutil) + Zinkoxid
- TiO₂ (Anatas) + Zinkoxid + Calciumtitanat
- TiO₂ (Rutil) + Zinkoxid + Calciumtitanat
- TiO₂ (Anatas) + Calciumtitanat + Zinkoxid
- TiO₂ (Rutil) + Calciumtitanat + Zinkoxid

Vorzugsweise besteht die hochbrechende Beschichtung ausschließlich aus Titandioxid und Zinkoxid und/oder einer oder mehreren schwerlöslichen Erdalkaliverbindungen, insbesondere Erdalkalititanat, Erdalkalistannat und/oder Erdalkalizirkonat. Besonders bevorzugte Beschichtungen bestehen aus 90,0 bis 99,8 Gew.% Titandioxid und 0,2 bis 10 Gew.% Zinkoxid und/oder einer oder mehrerer schwerlöslicher Erdalkaliverbindungen, vorzugsweise ein schwerlösliches Erdalkalititanat, Erdalkalistannat und/oder Erdalkalizirkonat. Sofern es sich um ein Gemisch aus Zinkoxid und einer schwerlöslichen ErdalkalimetallVerbindung handelt, beträgt das Massenverhältnis Zinkoxid : Erdalkaliverbindung 9 : 1 bis 1 : 9, insbesondere 1:1 bis 5 :1. Vorzugsweise besteht eine derartige Schicht aus Calciumtitanat und Zinkoxid. Die Schichten können dabei sowohl nacheinander als auch als Mischschicht aufgebracht werden. Die Zinkoxid-Schicht kann dabei direkt auf die Titandioxid-Schicht aufgebracht werden oder als äußere Schicht auf der Erdalkalimetallverbindung.

Das Titandioxid und die schwerlösliche Erdalkaliverbindung können als Gemisch in einer Schicht vorliegen oder als zwei separate Schichten auf das Substrat aufgebracht werden. Sofern die hochbrechende Beschichtung aus zwei Schichten besteht, besitzt die Titandioxidschicht vorzugsweise Schichtdicken von 20 - 100 nm , vorzugsweise von 30 - 80 nm und insbesondere von 40 - 60 nm. Die zweite Schicht aus der schwerlöslichen Erdalkalimetallverbindung und/oder aus Zinkoxid besitzt in der Regel Schichtdicken von 1 - 30 nm, vorzugsweise von 3 - 15 nm und insbesondere von 4 - 10 nm. Die Gesamtdicke der zweiten Schicht sollte 30 nm nicht überschreiten, unabhängig davon, ob diese Schicht aus einer oder mehreren Erdalkalimetallverbindungen oder Zinkoxid bzw. aus einem Gemisch aus Erdalkalimetallverbindung und Zinkoxid besteht oder, ob es sich um separate Schichten aus Erdalkalimetallverbindung und Zinkoxid handelt.

Die erfindungsgemäßen silberweißen Effektpigmente lassen sich relativ leicht herstellen.

Zunächst werden die im Handel erhältlichen synthetischen Glimmerteilchen oder die synthetisch hergestellten Glimmerbrocken mechanisch zerkleinert und entsprechend den Anforderungen in Bezug auf Äquivalenzdurchmesser und Dicken der Plättchen mittels Sedimentation, Dekantierung, Windsichtung und/oder Siebung klassiert.

Nachfolgend erfolgt die Belegung der Glimmerplättchen mit der hochbrechenden Beschichtung, welche vorzugsweise nasschemisch aufgebracht wird, wobei die zur Herstellung von Perlglanzpigmenten entwickelten nasschemischen Beschichtungsverfahren angewendet werden können. Derartige Verfahren sind z. B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen.

Die Belegung der synthetischen Glimmerplättchen mit Titandioxid erfolgt vorzugsweise nasschemisch nach dem Chlorid- oder Sulfatprozess.

Zur Erzeugung der Erdalkalischicht werden zu einer wässrigen Suspension enthaltend die mit TiO₂ beschichteten synthetischen Glimmerplättchen bei geeignetem pH-Wert ein wasserlösliches Erdalkalisalz bzw. ein Gemisch wasserlöslicher Erdalkalimetallsalze und ein wasserlösliches Zink-, Titan-, Zinn- und/oder Zirkoniumsalz zugegeben. Anstelle von Wasser können auch wasserhaltige Lösungsmittel auf Basis kurzkettiger Alkohole, wie z.B. Methanol, Ethanol, Propanol oder iso-Butanol als Lösemittel eingesetzt werden. Geeignete Erdalkalimetallsalze sind u.a. die Erdalkalichloride, ferner auch die Erdalkalinitrate und andere wasserlösliche Erdalkaliverbindungen. Bei der Herstellung von Erdalkalititanaten, -zirkonaten und -stannaten werden üblicherweise die entsprechenden Chloride, Sulfate und Nitrate des Titans, Zinns und/oder Zirkoniums im rein wässrigen Milieu verwendet.

Zur Erzeugung der Erdalkalischicht wird vorzugsweise das Peroxid-Verfahren verwendet, bei dem man zusätzlich zu den löslichen Erdalkaliverbindungen und den löslichen Verbindungen des Titans, Zinns und/oder Zirkoniums nach Wasserstoffperoxid in die Suspension der mit Titandioxid beschichteten Glimmerplättchen gibt.

Die Herstellung der erfindungsgemäßen silberweißen Effektpigmente erfolgt in der Regel, indem die synthetischen Glimmerplättchen in Wasser suspendiert und mit ein oder mehreren hydrolysierbaren Titansalzen bei einem für die Fällung geeigneten pH-Wert versetzt werden, der so gewählt wird, dass das Metalloxid bzw. Metalloxidhydrat direkt auf den Plättchen abgeschieden wird, ohne dass es zu wesentlichen Nebenfällungen kommt. Der pH-Wert wird üblicherweise durch gleichzeitiges Zudosieren einer Base und/oder Säure konstant gehalten. Üblicherweise findet die nachfolgende Beschichtung mit dem Zinkoxid und/oder Erdalkalimetalltitanat, -stannat und/oder -zirkonat ohne vorherige Aufarbeitung des mit TiO₂ beschichteten Glimmerpigments statt. Die Beschichtung erfolgt in der Regel durch Zugabe der gelösten Erdalkalichloride, der gelösten Chloride des Titans, Zinns und/oder Zirkoniums und von Wasserstoffperoxid.

Vorzugsweise wird auf das mit TiO₂ beschichtete Glimmerplättchen ein Calciumtitanat aufgebracht. Die Ausfällung derartiger Titankomplexe wird z.B. in G. Pfaff, Z. Chem. 28 (1988) 76 und Z. Chem. 29 (1989) sowie loc. cit. beschrieben.

Die beschichteten Substrate werden nach dem Filtrieren und Waschen zunächst 20 - 60 min bei Temperaturen von 50 - 150 °C, vorzugsweise bei 80 - 120 °C, getrocknet und nachfolgend bei 600 bis 1200 °C, vorzugsweise bei 700 - 1000 °C, insbesondere bei 700 - 900 °C, für 0,3 - 1 h, vorzugsweise 0,5 - 0,8 h geglüht.

Weiterhin kann die Beschichtung der TiO₂-Schicht auch in einem Wirbelbettreaktor durch Gasphasenbeschichtung erfolgen, wobei z. B. die in EP 0 045 851 A1 und EP 0 106 235 A1 zur Herstellung von Perlglanzpigmenten vorgeschlagenen Verfahren entsprechend angewendet werden können.

Die so hergestellten silberweißen Effektpigmente zeichnen sich neben dem hohem Weißgrad durch eine deutlich höhere Vergilbungsstabilität und eine wesentlich geringere Oberflächenaktivität gegenüber den im Handel erhältlichen silberweißen Effektpigmenten auf Basis von synthetischem Glimmer aus. Neben der hohen Vergilbungsstabilität weisen die so hergestellten Pigmente auch eine sehr gute Photostabilität im Pulver aber auch in Anwendungssystemen wie Kunststoffen, Lacken oder Druckfarben auf.

Der erhöhte Weißgrad lässt sich am besten beim direkten visuellen Vergleich der so hergestellten Effektpigmente in Kunststoffplättchen, Lackfilmen oder Druckabschlägen nachweisen. Als Vergleich dienen dabei Effektpigmente mit ähnlicher Morphologie auf Basis von natürlichem Glimmer, die den gleichen Schichtaufbau bestehend aus Titandioxid und Erdalkalititanat, -stannat und/oder -zirkonat aufweisen.

Die hohe Vergilbungsstabilität der erfindungsgemäßen Effektpigmente im Vergleich mit konventionellen silberweißen Effektpigmenten lässt sich visuell oder farbmetrisch bei der Reaktion einer Pigmentsuspension in Propanol und Dibutylphthalat mit einer Propylgallat-Lösung nachweisen, wobei die Verfärbung in Richtung Gelb (visuell) bzw. die Verschiebung des b-Wertes (L*a*b*-Farbsystem) nach + b (farbmetrisch, z. B. mit einem Johne-Reilhofer-Gerät) verfolgt und verglichen wird.

Zur zusätzlichen Erhöhung der Licht-, Wasser- und Wetterstabilität empfiehlt es sich häufig, in Abhängigkeit vom Einsatzgebiet, das fertige silberweiße Effektpigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung wird die chemische Stabilität weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendungsmedien können funktionelle Beschichtungen aus Al₂O₃ oder ZrO₂ oder deren Gemische bzw. Mischphasen auf die Pigmentoberfläche aufgebracht werden. Weiterhin sind organische, bzw. organisch/anorganisch kombinierte Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjee, Philips Technical Review, Vol. 44, No. 3, 81 ff. und P.H. Harding J.C. Berg, J. Adhesion Sci. Technol. Vol. 11 No. 4, S. 471-493.

Da die erfindungsgemäßen silberweißen Effektpigmente neben einer hohen Vergilbungsstabilität einen hellen und starken Glanz mit rein weißer Körperfarbe verbinden, lassen sich mit ihnen besonders wirksame Effekte in den verschiedenen Anwendungsmedien erzielen.

Es versteht sich von selbst, dass für die verschiedenen Anwendungszwecke die erfindungsgemäßen Effektpigmente auch vorteilhaft in Abmischung mit organischen Farbstoffen, organischen Pigmenten oder anorganischen Pigmenten, wie z. B. transparenten und deckenden Weiß-, Bunt- und Schwarzpigmenten sowie mit plättchenförmigen Eisenoxiden, holographischen Pigmenten, LCPs (Liquid Crystal Polymers), transparenten, bunten und schwarzen Glanzpigmenten auf der Basis von metalloxidbeschichteten Glimmer-, Glas-, Fe₂O₃-, Al₂O₃- und SiO₂-Plättchen, etc., verwendet werden können.

Die erfindugsgemäßen silberweißen Effektpigmente können in jedem Gewichtsverhältnis mit handelsüblichen Pigmenten und Füllstoffen gemischt werden. Vorzugsweise beträgt das Verhältnis 1 : 1 bis 9 : 1. Sofern die erfindungsgemäßen Effektpigmente mit Füllstoffen gemischt werden, kann das Mischungsverhältnis auch 99 :1 bis 1 : 99 betragen.

In den verschiedenen Anwendungen kann das erfindungsgemäße Effektpigment auch mit weiteren Farbmitteln jeden Typs, z. B. organischen und/oder anorganischen Absorptionspigmenten und Farbstoffen, mehrschichtigen Interferenzpigmenten, wie z.B. Timiron®, Iriodin® (Merck KGaA), Sicopearl® (BASF AG), ChromaFlair® (Flex Products Inc.), BiOCI-Pigmenten, Fischsilber, Metallpigmenten, z. B. von der Fa. Eckart, kombiniert werden. Dabei sind den Mischungsverhältnissen und Konzentrationen keine Grenzen gesetzt.

Die erfindungsgemäßen silberweißen Effektpigmente sind mit einer Vielzahl von Farbsystemen kompatibel, vorzugsweise aus dem Bereich der Lacke, Farben und Druckfarben. Für die Herstellung der Druckfarben für z. B. den Tiefdruck, Flexodruck, Offsetdruck, Offsetüberdruck-lackierung, ist eine Vielzahl von Bindern, insbesondere wasserlösliche Typen, geeignet, wie sie z. B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die erfindungsgemäßen Effektpigmente auch für die Lasermarkierung von Papier und Kunststoffen, sowie für Anwendungen im Agrarbereich, z. B. für Gewächshausfolien, sowie z. B. für die Farbgebung von Zeltplanen, geeignet.

Die erfindungsgemäßen Effektpigmente können zur Pigmentierung von Lacken, Druckfarben, Kunststoffen, Agrarfolien, Saatgutbeschichtung, Lebensmitteleinfärbungen, Knopfpasten, Arzneimittelüberzügen oder kosmetischen Formulierungen, wie Lippenstifte, Nagellacke, Presspuder, Shampoos, Seifen, lose Puder und Gele, verwendet werden. Die Konzentration des Pigments im zu pigmentierenden Anwendungssystem liegt in der Regel zwischen 0,1 und 70 Gew.%, vorzugsweise zwischen 0,1 und 50 Gew.% und insbesondere zwischen 0,5 und 10 Gew.%, bezogen auf den Gesamtfestkörpergehalt des Systems. Sie ist in der Regel abhängig vom konkreten Anwendungsfall.

In Kunststoffen enthaltend das erfindungsgemäße silberweiße Effektpigment, vorzugsweise in Mengen von 0,01 bis 50 Gew.%, insbesondere 0,1 bis 7 Gew.%, lassen sich besonders ausgeprägte Silberweiß-Effekte erzielen.

Im Lackbereich, insbesondere im Automobillack, wird das Effektpigment, auch für 3-Schichtaufbauten in Mengen von 0,1-20 Gew.%, vorzugsweise 1 bis 10 Gew.%, eingesetzt.

Im Lack hat das erfindungsgemäße Effektpigment den Vorteil, dass der angestrebte Glanz durch eine einschichtige Lackierung (Einschichtsystem bzw. Base coat im 2-Schichtaufbau) erzielt wird. Im Vergleich mit Lackierungen, die beispielsweise ein Mehrschichtpigment auf Basis von Glimmer bzw. ein herkömmliches, auf einem Substrat mit breiter Dickenverteilung basierendes Perlglanzpigment, statt des erfindungsgemäßen Effektpigments enthalten, zeigen Lackierungen mit dem erfindungsgemäßen Pigment eine deutlichere Tiefenwirkung und einen stärker ausgeprägten Weiß- und Glanzeffekt.

Das erfindungsgemäße Effektpigment kann auch vorteilhaft in der dekorativen und pflegenden Kosmetik eingesetzt werden. Die Einsatzkonzentration reicht von 0,01 Gew.% im Shampoo bis zu 100 Gew. % bei losen Pudern. Bei einer Mischung der erfindungsgemäßen Pigmente mit Füllstoffen, vorzugsweise mit sphärischen Füllstoffen, wie z. B. SiO₂, kann die Konzentration bei 0,01-70 Gew.% in der Formulierung liegen. Die kosmetischen Produkte, wie z.B. Nagellacke, Presspuder, Shampoos, lose Puder und Gele, zeichnen sich durch besonders interessante Farbeffekte und einen hohen Glanz aus.

Weiterhin kann das erfindungsgemäße Pigment in Badezusätzen, Zahnpasten und zur Veredlung von Lebensmitteln, z. B. Masse-Einfärbung und/oder Überzüge von Bonbons, Weingummi, wie z.B. Gummibärchen, Pralinen, Lakritze, Konfekt, Zuckerstangen, Puddings, Brausegetränke, Limonaden, etc., oder als Überzug, z.B. bei Dragees und Tabletten im Pharmabereich, eingesetzt werden.

Die erfindungsgemäßen Pigmente können weiterhin mit handelsüblichen Füllern gemischt werden. Als Füllstoffe sind z.B. zu nennen natürlicher und synthetischer Glimmer, Nylon Powder, reine oder gefüllte Melaminharze, Talcum, Gläser, Kaolin, Oxide oder Hydroxide von Aluminium, Magnesium, Calcium, Zink, BiOCI, Bariumsulfat, Calciumsulfat, Calciumcarbonat, Magnesiumcarbonat, Kohlenstoff, sowie physikalische oder chemische Kombinationen dieser Stoffe. Bezüglich der Partikelform des Füllstoffes gibt es keine Einschränkungen. Sie kann den Anforderungen gemäß z. B. plättchenförmig, sphärisch oder nadelförmig sein.

Selbstverständlich können die erfindungsgemäßen silberweißen Effektpigmente in den Formulierungen auch mit jeder Art von kosmetischen Roh- und Hilfsstoffen kombiniert werden. Dazu gehören u.a. Öle, Fette, Wachse, Filmbildner, Konservierungsmittel und allgemein anwendungstechnische Eigenschaften bestimmende Hilfsstoffe, wie z. B. Verdicker und rheologische Zusatzstoffe, wie z.B. Bentonite, Hektorite, Siliziumdioxide, Ca-Silicate, Gelatinen, hochmolekulare Kohlenhydrate und/oder oberflächenaktive Hilfsmittel etc.

Die die erfindungsgemäßen Effektpigmente enthaltenden Formulierungen können dem lipophilen, hydrophilen oder hydrophoben Typ angehören. Bei heterogenen Formulierungen mit diskreten wässrigen und nichtwässrigen Phasen können die erfindungsgemäßen Effektpigmente in jeweils nur einer der beiden Phasen enthalten oder auch über beide Phasen verteilt sein.

Die pH-Werte der Formulierungen können zwischen 1 und 14, bevorzugt zwischen 2 und 11 und besonders bevorzugt zwischen 5 und 8 liegen.

Den Konzentrationen der erfindungsgemäßen silberweißen Effektpigmente in der Formulierung sind keine Grenzen gesetzt. Sie können - je nach Anwendungsfall - zwischen 0,001 (rinse-off-Produkte, z.B. Duschgele) und 100 % (z.B. Glanzeffekt-Artikel für besondere Anwendungen) liegen.

Die erfindungsgemäßen Effektpigmente können weiterhin auch mit kosmetischen Wirkstoffen kombiniert werden. Geeignete Wirkstoffe sind z.B. Insect Repellents, UV A/BC-Schutzfilter (z.B. OMC, B3, MBC), Anti-Ageing-Wirkstoffe, Vitamine und deren Derivate (z.B. Vitamin A, C, E etc.), Selbstbräuner (z.B. DHA, Erytrolyse, u.a.) sowie weitere kosmetische Wirkstoffe wie z.B. Bisabolol, LPO, Ectoin, Emblica, Allantoin, Bioflavanoide und deren Derivate.

Bei der Pigmentierung von Bindemittelsystemen z. B. für Farben und Druckfarben für den Tiefdruck, Offsetdruck oder Siebdruck, oder als Vorprodukt für Druckfarben, hat sich der Einsatz der erfindungsgemäßen Effektpigmente in Form von hochpigmentierten Pasten, Granulaten, Pellets, etc., als besonders geeignet erwiesen. Das Effektpigmente wird in der Regel in die Druckfarbe in Mengen von 2-35 Gew.%, vorzugsweise 5-25 Gew.%, und insbesondere 8-20 Gew.% eingearbeitet. Offsetdruckfarben können die Pigmente bis zu 40 Gew.% und mehr enthalten. Die Vorprodukte für die Druckfarben, z.B. in Granulatform, als Pellets, Briketts, etc., enthalten neben dem Bindemittel und Additiven bis zu 98 Gew.% des erfindungsgemäßen Pigments. Die Druckfarben enthaltend das erfindungsgemäße Pigment zeigen reinere Farbtöne als mit herkömmlichen Effektpigmenten. Die Partikeldicken der erfindungsgemäßen Effektpigmente sind relativ gering und bedingen daher eine besonders gute Verdruckbarkeit.

Die erfindungsgemäßen Effektpigmente sind weiterhin geeignet zur Herstellung von fließfähigen Pigmentpräparationen und Trockenpräparaten, insbesondere für Druckfarben, enthaltend ein oder mehrere erfindungsgemäße Pigmente, Bindemittel und optional ein oder mehrere Additive.

Gegenstand der Erfindung sind somit auch Formulierungen enthaltend die erfindungsgemäßen silberweißen Effektpigmente.

Gegenstand der Erfindung sind insbesondere Formulierungen, die neben dem erfindungsgemäßen Effektpigment mindestens einen Bestandteil ausgewählt aus der Gruppe der Absorptionsmittel, Adstringenzien, antimikrobiellen Stoffen, Antioxidantien, Antiperspirantien, Antischaummitteln, Anti-schuppenwirkstoffen, Antistatika, Bindemitteln, biologischen Zusatzstoffen, Bleichmitteln, Chelatbildnern, Desodorierungsmitteln, Emollentien, Emulgatoren, Emulsionsstabilisatoren, Farbstoffen, Feuchthaltemitteln, Filmbildnern, Füllstoffen, Geruchsstoffen, Geschmacksstoffen, Insect Repellents, Konservierungsmitteln, Korrosionsschutzmitteln, kosmetischen Ölen, Lösungsmitteln, Oxidationsmitteln, pflanzlichen Bestandteilen, Puffer-substanzen, Reduktionsmitteln, Tensiden, Treibgasen, Trübungsmitteln, UV-Filtern und UV-Absorbern, Vergällungsmitteln, Viskositätsreglern, Parfüm und Vitaminen enthalten.

Die nachfolgenden Beispiele sollen die Erfindung erläutern, ohne sie jedoch zu begrenzen.

### Beispiele

### Beispiel 1

100g synthetischer Fluorophlogopit-Glimmer mit einer Äquivalenzdurchmesser-Verteilung 2 - 40 µm werden in vollentsalztem Wasser suspendiert. Die Einsatzkonzentration beträgt dabei 50 g/l. Der pH-Wert wird auf 2,0 gebracht und die Suspension auf 75 °C erhitzt. Zunächst erfolgt die Zugabe von 100 ml einer 2 %igen Zinntetrachloridlösung. Durch Gegentitration mit 32 %iger Natronlauge wird der pH-Wert bei 2,0 konstant zu halten. Anschließend wird durch Zugabe von Salzsäure der pH-Wert auf 1,8 eingestellt. Es werden nunmehr 240 ml 30 %ige Titantetrachloridlösung bei konstant gehaltenem pH = 1,8 zudosiert.

Der Endpunkt der TiO₂-Hydrat-Schicht ist gegeben durch den Verbrauch des vorgegebenen Volumens der Lösung. Danach wird durch Zugabe von 32 %iger Natronlauge der pH-Wert auf 9,0 eingestellt. Anschließend werden 50 ml einer wässrigen Lösung von CaCl₂, Titanchlorid und Wasserstoffperoxid (7,2 g CaCl₂ x 2 H₂O, 0,08 mol TiCl₄, 6 ml einer 30 %igen WasserstoffperoxidLösung mit Wasser auf ein Volumen von 50 ml aufgefüllt) bei 75 °C innerhalb von 30 Minuten zudosiert, wobei der pH-Wert konstant gehalten wird. Das Reaktionsprodukt wird abfiltriert, gewaschen, getrocknet und bei 900 °C geglüht. Man erhält ein silberweißes Effektpigment, das einen sehr hohen Weißgrad besitzt (im Polypropylenplättchen visueller und farbmetrischer Vergleich mit Iriodin® 103 der Merck KGaA, Darmstadt) und gegen Vergilbung stabil ist (visuell und farbmetrisch bestimmt mit dem Propylgallat-Test).

### Anwendungsbeispiele

### Beispiel A: Duschgel

**Phase A**

| **Rohstoff** | **Bezugsquelle** | **INCI** | **[%]** |
|---|---|---|---|
| Pigment aus Beispiel 1 | Merck KGaA | | 0,10 |
| Keltrol T | Kelco | Xanthan Gum | 0,75 |
| Wasser, demineralisiert | | Aqua (Water) | 64,95 |

**Phase B**

| **Rohstoff** | **Bezugsquelle** | **INCI** | **[%]** |
|---|---|---|---|
| Plantacare 2000 UP | Cognis GmbH | Decyl Glucoside | 20,00 |
| Texapon ASV 50 | Cognis GmbH | Sodium Laureth Sulfate, Sodium Laureth-8 Sulfate, Magnesium Laureth Sulfate, Magnesium Laureth-8 Sulfate, Sodium Oleth Sulfate, Magnesium Oleth Sulfate | 3,60 |
| Bronidox L | Cognis GmbH | Propylene Glycol, 5-Bromo-5-Nitro-1,3-Dioxane | 0,20 |
| Parfümöl Everest 79658 SB | Haarmann & Reimer GmbH | Parfum | 0,05 |
| 1 % FD&C Blue No. 1 in Wasser | BASF AG | Aqua (Water), CI 42090 (FD&C Blue No. 1) | 0,20 |

**Phase C**

| **Rohstoff** | **Bezugsquelle** | **INCI** | **[%]** |
|---|---|---|---|
| Citronensäure Monohydrat | Merck KGaA/Rona® | Citric Acid | 0,15 |
| Wasser, demineralisiert | | Aqua (Water) | 10,00 |

### Herstellung:

Für Phase A das Interferenzpigment in das Wasser einrühren. Keltril T unter Rühren langsam einstreuen und rühren bis es gelöst ist. Die Phasen B und C nacheinander hinzufügen und dabei langsam rühren bis alles homogen verteilt ist. pH-Wert auf 6,0 bis 6,4 einstellen.

### Beispiel B: - Nagellack

| **Rohstoff** | **Bezugsquelle** | **INCI** | **[%]** |
|---|---|---|---|
| Pigment aus Beispiel 1 | Merck KGaA | | 2,00 |
| Thixotrope Nagellack-Base 1348 | International Lacquers S.A. | Toluene, Ethyl Acetate, Butyl Acetate, Nitrocellulose, Tosylamide/Formaldehyde Resin, Dibutyl Phthalate, Isopropyl Alcohol, Stearalkonium Hectorite, Camphor, Acrylates Copolymer, Benzophenone-1 | 98,00 |

### Herstellung:

Das Interferenzpigment wird zusammen mit der Lackbase eingewogen, gut mit einem Spatel von Hand vermischt und anschließend 10 min bei 1000 Upm gerührt.

### Beispiel C: - Lacksystem

| | |
|---|---|
| 90 Gew. % | Hydroglasur BG/S farblos (Wasserlack der Fa. Ernst Diegel GmbH) |
| 10 Gew. % | silberweißes Effektpigment aus Beispiel 1 |

Lackieren durch Aufsprühen bei 80 °C
5 min vortrocknen bei 80 °C
20 min einbrennen bei 180 °C

### Beispiel D: - Kunststoff

1 kg Polystyrolgranulat werden in einem Taumelmischer mit 5 g Haftmittel gleichmäßig benetzt. Dazu werden dann 42 g grünes Interferenzpigment aus Beispiel 1 zugegeben und 2 min lang gemischt. Dieses Granulat wird auf einer Spritzgießmaschine unter üblichen Bedingungen zu Stufenplättchen mit den Maßen 4 x 3 x 0,5 cm verarbeitet. Die Stufenplättchen zeichnen sich durch ihren ausgeprägten Sparkle-Effekt aus.

### Beispiel E: - Einfärbung von Süßwaren

### Rohware: Brause-Bonbons weiß

Sprühlösung:
94 % alkoholische Schellacklösung der Fa. Kaul
6 % silberweißes Effektpigment aus Beispiel 1

Die Brausebonbons werden mit einer Interferenzpigment/Schellacklösung besprüht bis der gewünschte Farbauftrag erreicht ist. Eine nachträgliche Trocknung mit Kaltluft ist möglich.

Die Produkte der Anwendungsbeispiele A - E zeichnen sich durch ihren hohen Glanz, eine reine Farbe und eine hohe Photostabilität aus.

## Patentansprüche

1. Silberweiße Effektpigmente, **dadurch gekennzeichnet, dass** synthetische Glimmerplättchen mit einer Äquivalenzdurchmesser-Verteilung, nach der 90 % der Teilchen im Bereich von 2 bis 40 µm liegen, und einer Dickenverteilung, nach der 90 % der Teilchen im Bereich von 100 bis 3500 nm liegen, eine Beschichtung mit einer Brechzahl ≥ 1,9 enthaltend Titandioxid und Zinkoxid und/oder eine oder mehrere schwerlösliche Erdalkaliverbindungen aufweisen.

2. Effektpigmente nach Anspruch 1, **dadurch gekennzeichnet, dass** der Formfaktor (aspect ratio: Durchmesser/Dicke-Verhältnis) des Glimmerplättchens 5 - 200 beträgt.

3. Effektpigmente nach Anspruch 1 oder 2, **dadurch gekennzeichnet, dass** es sich bei dem synthetischem Glimmer um Fluorophlogopit handelt.

4. Effektpigmente nach einem oder mehreren der Ansprüche 1 bis 3, **dadurch gekennzeichnet, dass** die schwerlösliche Erdalkaliverbindung ein Erdalkalititanat, Erdalkalistannat, Erdalkalizirkonat oder ein Gemisch der genannten Verbindungen ist.

5. Effektpigmente nach einem oder mehreren der Ansprüche 1 bis 4, **dadurch gekennzeichnet, dass** das Erdalkalititanat aus Magnesium-, Calcium-, Strontium- oder Bariumtitanat besteht.

6. Effektpigmente nach einem oder mehreren der Ansprüche 1 bis 5, **dadurch gekennzeichnet, dass** das Erdalkalistannat aus Magnesium-, Calcium-, Strontium- oder Bariumstannat besteht.

7. Effektpigmente nach einem oder mehreren der Ansprüche 1 bis 6, **dadurch gekennzeichnet, dass** das Erdalkalizirkonat aus Magnesium-, Calcium-, Strontium- oder Bariumzirkonat besteht.

8. Effektpigmente nach einem oder mehreren der Ansprüche 1 bis 7, **dadurch gekennzeichnet, dass** die hochbrechende Beschichtung aus 90-99,8 Gew.% Titandioxid und 0,2-10 Gew.% Zinkoxid und/oder einer oder mehreren schwerlöslichen Erdalkalimetallverbindungen besteht.

9. Effektpigmente nach einem oder mehreren der Ansprüche 1 bis 8, **dadurch gekennzeichnet, dass** das Glimmerplättchen eine erste Schicht aus Titandioxid und eine zweite Schicht aus Calciumtitanat aufweist.

10. Effektpigmente nach einem oder mehreren der Ansprüche 1 bis 9, **dadurch gekennzeichnet, dass** das Glimmerplättchen eine erste Schicht aus Titandioxid und eine zweite Schicht aus Zinkoxid aufweist.

11. Effektpigmente nach einem oder mehreren der Ansprüche 1 bis 10, **dadurch gekennzeichnet, dass** das synthetische Glimmerplättchen eine Beschichtung aus der Gruppe
- TiO₂ (Anatas)+ Calciumtitanat
- TiO₂ (Rutil) + Calciumtitanat
- TiO₂ (Anatas) + Calciumzirkonat
- TiO₂ (Rutil) + Calciumzirkonat
- TiO₂ (Anatas) + Calciumstannat
- TiO₂ (Rutil) + Calciumstannat
- TiO₂ (Anatas) + Zinkoxid
- TiO₂ (Rutil) + Zinkoxid
- TiO₂ (Anatas) + Zinkoxid + Calciumtitanat
- TiO₂ (Rutil) + Zinkoxid + Calciumtitanat
- TiO₂ (Anatas) + Calciumtitanat + Zinkoxid
- TiO₂ (Rutil) + Calciumtitanat + Zinkoxid
aufweist.

12. Effektpigmente nach einem oder mehreren der Ansprüche 1 bis 11, **dadurch gekennzeichnet, dass** die hochbrechende Beschichtung mit einer Brechzahl ≥ 1,9 enthaltend Titandioxid und Zinkoxid und/oder eine oder mehrere schwerlösliche Erdalkaliverbindungen Schichtdicken von 20-130 nm aufweist.

13. Verfahren zur Herstellung der Effektpigmente nach einem oder mehreren der Ansprüche 1 bis 12, **dadurch gekennzeichnet, dass** die Beschichtung der synthetischen Glimmerplättchen nasschemisch durch hydrolytische Zersetzung von Metallsalzen in wässrigem Medium erfolgt.

14. Verwendung der Effektpigmente nach einem oder mehreren der Ansprüche 1 bis 12 in Farben, Knopfpasten, Lacken, Druckfarben, Sicherheitsdruckfarben, Kunststoffen, keramischen Materialien, Gläsern, zur Saatgutbeschichtung, als Dotiermittel für die Lasermarkierung von Kunststoffen und Papieren, als Additiv zum Laserschweißen von Kunststoffen, als Additiv zur Farbgebung im Lebensmittel- und Pharmabereich, in kosmetischen Formulierungen und zur Herstellung von Pigmentpräparationen und Trockenpräparaten.

15. Formulierungen enthaltend ein oder mehrere Effektpigmente nach einem oder mehreren der Ansprüche 1 bis 12.

16. Formulierungen nach Anspruch 15, **dadurch gekennzeichnet, dass** sie neben den Effektpigmenten mindestens einen Bestandteil ausgewählt aus der Gruppe der Absorptionsmittel, Adstringenzien, antimikrobiellen Stoffe, Antioxidantien, Antiperspirantien, Antischaummitteln, Antischuppenwirkstoffe, Antistatika, Bindemittel, biologischen Zusatzstoffen, Bleichmitteln, Chelatbildnern, Desodorierungsmitteln, Emollentien, Emulgatoren, Emulsionsstabilisatoren, Farbstoffen, Feuchthaltemitteln, Filmbildnern, Füllstoffen, Geruchsstoffen, Geschmacksstoffen, Insect Repellents, Konservierungsmitteln, Korrosionsschutzmitteln, kosmetischen Ölen, Lösungsmitteln, Oxidationsmitteln, pflanzlichen Bestandteilen, Puffer-substanzen, Reduktionsmitteln, Tensiden, Treibgasen, Trübungsmitteln, UV-Filtern und UV-Absorbern, Vergällungsmitteln, Viskositätsreglern, Parfüm und Vitaminen enthalten.

17. Pigmentpräparationen enthaltend ein oder mehrere Bindemittel, optional ein oder mehrere Additive und Effektpigmente nach einem oder mehreren der Ansprüche 1 bis 12.

18. Trockenpräparationen enthaltend Effektpigmente nach einem oder mehreren der Ansprüche 1 bis 12.

## Claims

1. Silver-white effect pigments, **characterised in that** synthetic mica flakes having an equivalence diameter distribution according to which 90% of the particles are in the range from 2 to 40 µm, and a thickness distribution according to which 90% of the particles are in the range from 100 to 3500 nm, have a coating having a refractive index ≥ 1.9 comprising titanium dioxide and zinc oxide and/or one or more low-solubility alkaline-earth metal compounds.

2. Effect pigments according to Claim 1, **characterised in that** the aspect ratio (diameter/thickness ratio) of the mica flake is 5 - 200.

3. Effect pigments according to Claim 1 or 2, **characterised in that** the synthetic mica is fluorophlogopite.

4. Effect pigments according to one or more of Claims 1 to 3, **characterised in that** the low-solubility alkaline-earth metal compound is an alkaline-earth metal titanate, alkaline-earth metal stannate, alkaline-earth metal zirconate or a mixture of the said compounds.

5. Effect pigments according to one or more of Claims 1 to 4, **characterised in that** the alkaline-earth metal titanate consists of magnesium titanate, calcium titanate, strontium titanate or barium titanate.

6. Effect pigments according to one or more of Claims 1 to 5, **characterised in that** the alkaline-earth metal stannate consists of magnesium stannate, calcium stannate, strontium stannate or barium stannate.

7. Effect pigments according to one or more of Claims 1 to 6, **characterised in that** the alkaline-earth metal zirconate consists of magnesium zirconate, calcium zirconate, strontium zirconate or barium zirconate.

8. Effect pigments according to one or more of Claims 1 to 7, **characterised in that** the highly refractive coating consists of 90-99.8% by weight of titanium dioxide and 0.2-10% by weight of zinc oxide and/or one or more low-solubility alkaline-earth metal compounds.

9. Effect pigments according to one or more of Claims 1 to 8, **characterised in that** the mica flakes have a first layer of titanium dioxide and a second layer of calcium titanate.

10. Effect pigments according to one or more of Claims 1 to 9, **characterised in that** the mica flakes have a first layer of titanium dioxide and a second layer of zinc oxide.

11. Effect pigments according to one or more of Claims 1 to 10, **characterised in that** the synthetic mica flakes have a coating from the group
- TiO₂ (anatase) + calcium titanate
- TiO₂ (rutile) + calcium titanate
- TiO₂ (anatase) + calcium zirconate
- TiO₂ (rutile) + calcium zirconate
- TiO₂ (anatase) + calcium stannate
- TiO₂ (rutile) + calcium stannate
- TiO₂ (anatase) + zinc oxide
- TiO₂ (rutile) + zinc oxide
- TiO₂ (anatase) + zinc oxide + calcium titanate
- TiO₂ (rutile) + zinc oxide + calcium titanate
- TiO₂ (anatase) + calcium titanate + zinc oxide
- TiO₂ (rutile) + calcium titanate + zinc oxide.

12. Effect pigments according to one or more of Claims 1 to 11, **characterised in that** the highly refractive coating having a refractive index ≥ 1.9 comprising titanium dioxide and zinc oxide and/or one or more low-solubility alkaline-earth metal compounds has layer thicknesses of 20-130 nm.

13. Process for the preparation of the effect pigments according to one or more of Claims 1 to 12, **characterised in that** the coating of the synthetic mica flakes is carried out by wet-chemical methods by hydrolytic decomposition of metal salts in aqueous medium.

14. Use of the effect pigments according to one or more of Claims 1 to 12 in paints, button pastes, lacquers, printing inks, security printing inks, plastics, ceramic materials, glasses, for coating seed, as dopant for the laser marking of plastics and papers, as additive for the laser welding of plastics, as additive for colouring in the foods and pharmaceuticals sector, in cosmetic formulations and for the preparation of pigment compositions and dry preparations.

15. Formulations comprising one or more effect pigments according to one or more of Claims 1 to 12.

16. Formulations according to Claim 15, **characterised in that**, besides the effect pigments, they comprise at least one constituent selected from the group of the absorbents, astringents, antimicrobial substances, antioxidants, antiperspirants, antifoaming agents, antidandruff active ingredients, antistatics, binders, biological additives, bleaching agents, chelating agents, deodorants, emollients, emulsifiers, emulsion stabilisers, dyes, humectants, film formers, fillers, odour substances, flavour substances, insect repellents, preservatives, anticorrosion agents, cosmetic oils, solvents, oxidants, vegetable constituents, buffer substances, reducing agents, surfactants, propellant gases, opacifiers, UV filters and UV absorbers, denaturing agents, viscosity regulators, perfume and vitamins.

17. Pigment compositions comprising one or more binders, optionally one or more additives and effect pigments according to one or more of Claims 1 to 12.

18. Dry preparations comprising effect pigments according to one or more of Claims 1 to 12.

## Revendications

1. Pigments à effet blanc argenté, **caractérisés en ce que** des flocons de mica synthétique, qui présentent une distribution de diamètres d'équivalence selon laquelle 90% des particules sont à l'intérieur de la plage qui va de 2 à 40 µm et une distribution d'épaisseurs selon laquelle 90% des particules sont à l'intérieur de la plage qui va de 100 à 3500 nm, comportent un revêtement qui présente un indice de réfraction ≥ 1,9 et qui comprend du dioxyde de titane et de l'oxyde de zinc et/ou un ou plusieurs composé(s) de métal/métaux des terres alcalines de solubilité faible.

2. Pigments à effet selon la revendication 1, **caractérisés en ce que** le rapport d'aspect (rapport diamètre/épaisseur) du flocon de mica est compris entre 5 et 200.

3. Pigments à effet selon la revendication 1 ou 2, **caractérisés en ce que** le mica synthétique est du fluorophlogopite.

4. Pigments à effet selon une ou plusieurs des revendications 1 à 3, **caractérisés en ce que** le composé de métal/métaux des terres alcalines de solubilité faible est un titanate de métal/métaux des terres alcalines, un stannate de métal/métaux des terres alcalines, un zirconate de métal/métaux des terres alcalines ou un mélange desdits composés.

5. Pigments à effet selon une ou plusieurs des revendications 1 à 4, **caractérisés en ce que** le titanate de métal/métaux des terres alcalines est constitué par du titanate de magnésium, du titanate de calcium, du titanate de strontium ou du titanate de baryum.

6. Pigments à effet selon une ou plusieurs des revendications 1 à 5, **caractérisés en ce que** le stannate de métal/métaux des terres alcalines est constitué par du stannate de magnésium, du stannate de calcium, du stannate de strontium ou du stannate de baryum.

7. Pigments à effet selon une ou plusieurs des revendications 1 à 6, **caractérisés en ce que** le zirconate de métal/métaux des terres alcalines est constitué par du zirconate de magnésium, du zirconate de calcium, du zirconate de strontium ou du zirconate de baryum.

8. Pigments à effet selon une ou plusieurs des revendications 1 à 7, **caractérisés en ce que** le revêtement qui présente un indice de réfraction élevé est constitué par de 90 à 99,8% en poids de dioxyde de titane et par de 0,2 à 10% en poids d'oxyde de zinc et/ou par un ou plusieurs composé(s) de métal/métaux des terres alcalines de solubilité faible.

9. Pigments à effet selon une ou plusieurs des revendications 1 à 8, **caractérisés en ce que** les flocons de mica comportent une première couche en dioxyde de titane et une seconde couche en titanate de calcium.

10. Pigments à effet selon une ou plusieurs des revendications 1 à 9, **caractérisés en ce que** les flocons de mica comportent une première couche en dioxyde de titane et une seconde couche en oxyde de zinc.

11. Pigments à effet selon une ou plusieurs des revendications 1 à 10, **caractérisés en ce que** les flocons de mica synthétique comportent un revêtement pris parmi le groupe :
- TiO₂ (anatase) + titanate de calcium
- TiO₂ (rutile) + titanate de calcium
- TiO₂ (anatase) + zirconate de calcium
- TiO₂ (rutile) + zirconate de calcium
- TiO₂ (anatase) + stannate de calcium
- TiO₂ (rutile) + stannate de calcium
- TiO₂ (anatase) + oxyde de zinc
- TiO₂ (rutile) + oxyde de zinc
- TiO₂ (anatase) + oxyde de zinc + titanate de calcium
- TiO₂ (rutile) + oxyde de zinc + titanate de calcium
- TiO₂ (anatase) + titanate de calcium + oxyde de zinc
- TiO₂ (rutile) + titanate de calcium + oxyde de zinc.

12. Pigments à effet selon une ou plusieurs des revendications 1 à 11, **caractérisés en ce que** le revêtement à indice de réfraction élevé qui présente un indice de réfraction ≥ 1,9 et qui comprend du dioxyde de titane et de l'oxyde de zinc et/ou un ou plusieurs composé(s) de métal/métaux des terres alcalines de solubilité faible présente des épaisseurs de couche de 20 à 130 nm.

13. Procédé pour la préparation des pigments à effet selon une ou plusieurs des revendications 1 à 12, **caractérisé en ce que** le revêtement des flocons de mica synthétique est mis en œuvre au moyen de procédés chimiques par voie humide au moyen d'une décomposition hydrolytique de sels de métal/métaux dans un milieu aqueux.

14. Utilisation des pigments à effet selon une ou plusieurs des revendications 1 à 12 dans les peintures, les pâtes pour la fabrication de boutons, les laques, les encres d'impression, les encres d'impression de sécurité, les matières plastiques, les matériaux de céramique, les verres, pour enrober ou pelliculer les semences, en tant que dopant pour le marquage au laser des matières plastiques et des papiers, en tant qu'additif pour le soudage au laser des matières plastiques, en tant qu'additif pour la coloration dans le secteur des produits alimentaires et des produits pharmaceutiques, dans les formulations cosmétiques et pour la préparation de compositions de pigment(s) et de préparations sèches.

15. Formulations comprenant un ou plusieurs pigment(s) à effet selon une ou plusieurs des revendications 1 à 12.

16. Formulations selon la revendication 15, **caractérisées en ce que**, en plus des pigments à effet, elles comprennent au moins un constituant qui est sélectionné parmi le groupe formé par les absorbants, les astringents, les substances antimicrobiennes, les antioxydants, les anti-transpirants, les agents anti-moussage, les ingrédients actifs antipelliculaires, les antistatiques, les agents de liaison, les additifs biologiques, les agents de blanchiment, les agents chélatants, les déodorants, les agents adoucissants, les émulsifiants, les stabilisateurs d'émulsion, les colorants, les agents humidifiants, les agents filmogènes, les agents de remplissage, les substances odoriférantes, les substances aromatisantes, les insectifuges, les conservateurs, les agents anticorrosion, les huiles cosmétiques, les solvants, les oxydants, les constituants végétaux, les substances tampon, les agents de réduction, les agents tensioactifs, les gaz de propulsion, les agents d'opacification, les filtres UV et les absorbeurs UV, les agents dénaturants, les régulateurs de viscosité, les parfums et les vitamines.

17. Compositions de pigments comprenant un ou plusieurs agent(s) de liaison, en option un ou plusieurs additif(s) et des pigments à effet selon une ou plusieurs des revendications 1 à 12.

18. Préparations sèches comprenant des pigments à effet selon une ou plusieurs des revendications 1 à 12.
